(19) Europäisches Patentamt
European Patent Office
Office européen des brevets

(11) EP 4 679 718 A1

(12) EUROPEAN PATENT APPLICATION

(43) Date of publication:
14.01.2026 Bulletin 2026/03

(51) International Patent Classification (IPC):
H04B 1/10 (2006.01)

(21) Application number: 25175927.0

(22) Date of filing: 13.05.2025

(52) Cooperative Patent Classification (CPC):
H04B 1/1027

(84) Designated Contracting States:
AL AT BE BG CH CY CZ DE DK EE ES FI FR GB
GR HR HU IE IS IT LI LT LU LV MC ME MK MT NL
NO PL PT RO RS SE SI SK SM TR
Designated Extension States:
BA
Designated Validation States:
GE KH LA MA MD TN

(30) Priority: 12.07.2024 KR 20240092576

(71) Applicant: Samsung Electronics Co., Ltd.
Suwon-si, Gyeonggi-do 16677 (KR)

(72) Inventors:
• LEE, Jaehwan
16677 Suwon-si (KR)
• KIM, Jinho
16677 Suwon-si (KR)
• JOO, Hyunseung
16677 Suwon-si (KR)
• YUM, Kunil
16677 Suwon-si (KR)

(74) Representative: Marks & Clerk LLP
15 Fetter Lane
London EC4A 1BW (GB)

(54) **MODEM CHIP FOR PERFORMING DATA-BASED INTERFERENCE WHITENING AND OPERATING METHOD THEREOF**

(57) A modem chip includes a transceiver that receives a reference signal that is allocated a plurality of first resource elements (REs) and a data signal that is allocated a plurality of second REs, and a processor that generates a first noise plus interference vector, based on the reference signal and a channel estimate matrix, generates a first filter, based on the first noise plus interference vector, the first filter being configured to filter interference noise in the data signal, and generates a plurality of estimate values for data by performing interference filtering on the data signal, based on the first filter. The processor further determines at least one sample RE among the second REs, based on sample selection information, and, based on the at least one sample estimate value corresponding to the at least one sample RE, generates a second filter.

FIG. 10

START

RECEIVE REFERENCE SIGNAL ALLOCATED PLURALITY OF FIRST REs AND DATA SIGNAL ALLOCATED PLURALITY OF SECOND REs — S100

GENERATE FIRST NI VECTOR FOR CHANNEL OF REFERENCE SIGNAL, BASED ON REFERENCE SIGNAL AND CHANNEL ESTIMATE MATRIX FOR CHANNEL OF REFERENCE SIGNAL — S200

GENERATE FIRST WHITENING FILTER CONFIGURED TO WHITEN COLORED NOISE IN DATA SIGNAL, BASED ON FIRST NI VECTOR — S300

GENERATE PLURALITY OF ESTIMATE VALUES FOR DATA CORRESPONDING TO SECOND REs ALLOCATED TO DATA SIGNAL BY PERFORMING INTERFERENCE WHITENING ON DATA SIGNAL BASED ON FIRST WHITENING FILTER — S400

OBTAIN AT LEAST ONE SAMPLE RE AMONG SECOND REs, BASED ON SAMPLE SELECTION INFORMATION CORRESPONDING TO CHANNEL ENVIRONMENT OF RECEIVED SIGNAL — S500

OBTAIN AT LEAST ONE SAMPLE ESTIMATE VALUE CORRESPONDING TO AT LEAST ONE SAMPLE RE AMONG ESTIMATE VALUES AND GENERATE SECOND WHITENING FILTER BASED ON AT LEAST ONE SAMPLE ESTIMATE VALUE — S600

END

**EP 4 679 718 A1**

**Description**

BACKGROUND

The disclosure relates to a modem chip, and in particular, a modem chip for detecting and decoding a data signal based on interference filtering, and an operating method of the modem chip.

In new radio (NR) communication systems, noise plus interference (NI) is one of the main causes of degradation in performance of communication systems. In a related art, an interference whitening technique may be used to address the NI problem. For example, the interference whitening technique may perform noise normalization on each of a plurality of antennas to alleviate colored noise and interference.

Moreover, in order to alleviate or eliminate colored noise, whitening filters may be generated based on a demodulation reference signal (DMRS) and/or a physical downlink shared channel (PDSCH). However, whitening filters generated based on DMRS have low whitening performance due to a small number of samples. On the other hand, whitening filters generated based on PDSCH have a large number of samples, but have issues with reliability of the samples and also consume significant power and time. Therefore, there is a need for generating a high-accuracy whitening filter based on a large number of highly reliable samples, to perform interference whitening.

SUMMARY

Embodiments of the disclosure provide a modem chip configured to select at least one resource element (RE) having high reliability among a plurality of REs corresponding to a physical downlink shared channel (PDSCH) and generate a whitening filter based on an estimate value corresponding to the selected RE(s) and an operating method of the modem chip.

According to an embodiment of the disclosure, there is provided a semiconductor chip including: a transceiver configured to receive a reference signal and a data signal, the reference signal being allocated a plurality of first resource elements (REs), and the data signal being allocated a plurality of second REs; and a processor configured to: generate a first noise plus interference vector for a channel of the reference signal, based on the reference signal and a channel estimate matrix for the channel of the reference signal, generate a first filter, based on the first noise plus interference vector, the first filter configured to filter interference noise in the data signal, generate a plurality of estimate values for data corresponding to the plurality of second REs allocated to the data signal by performing interference filtering on the data signal, based on the first filter, obtain at least one sample RE among the plurality of second REs, based on sample selection information corresponding to a channel environment of a reference signal received through the transceiver, obtain at least one sample estimate value corresponding to the at least one sample RE among the plurality of estimate values, and generate a second filter based on the at least one sample estimate value.

According to another embodiment of the disclosure, there is provided an operating method of a semiconductor chip, the operating method including: receiving a reference signal and a data signal allocated a plurality of second REs, the reference signal being allocated a plurality of first resource elements (REs), and the data signal being allocated a plurality of second REs; generating a first noise plus interference vector for a channel of the reference signal, based on the reference signal and a channel estimate matrix for the channel of the reference signal; generating a first filter, based on the first noise plus interference vector, the first filter configured to filter interference noise in the data signal; generating a plurality of estimate values for data corresponding to the plurality of second REs allocated to the data signal by performing interference filtering on the data signal, based on the first filter; obtaining at least one sample RE among the plurality of second REs, based on sample selection information corresponding to a channel environment of a reference signal; obtaining at least one sample estimate value corresponding to the at least one sample RE among the plurality of estimate values; and generating a second filter based on the at least one sample estimate value.

According to another embodiment of the disclosure, there is provided a semiconductor chip including: a transceiver configured to receive a demodulation reference signal (DMRS) and a physical downlink shared channel (PDSCH), the DMRS being allocated a plurality of first resource elements (REs), and the PDSCH being allocated a plurality of second REs; and a processor configured to: generate a first noise plus interference vector for a channel of the DMRS, based on the DMRS and a channel estimate matrix for the channel of the DMRS, generate a first filter, based on the first noise plus interference vector, the first filter configured to filter interference noise in the PDSCH, generate a plurality of estimate values respectively corresponding to the plurality of second REs allocated to the PDSCH, by performing interference filtering on the PDSCH, based on the first filter, obtain at least one sample RE among the plurality of second REs, based on sample selection information including at least one of delay spread information, Doppler frequency information or information about a number of first REs in one resource block (RB) of a reference signal receiving through the transceiver, obtain at least one sample estimate value corresponding to the at least one sample RE among the plurality of estimate values, generate a second filter, based on the at least one sample estimate value and a second noise plus interference vector for the PDSCH, the second noise plus interference vector being generated based on the at least one

2

sample estimate value, and generate a plurality of data values respectively corresponding to the plurality of second REs by performing, based on the second filter, filtering on interference in the PDSCH.

At least some of the above and other features of the invention are set out in the claims.

BRIEF DESCRIPTION OF DRAWINGS

Embodiments will be more clearly understood from the following detailed description taken in conjunction with the accompanying drawings in which:

FIG. 1 is a block diagram of a wireless communication system according to an embodiment;
FIG. 2 is a block diagram of a user equipment (UE) according to an embodiment;
FIG. 3 is a block diagram illustrating a first estimation circuit according to an embodiment;
FIG. 4 is a block diagram illustrating a second estimation circuit according to an embodiment;
FIG. 5 is a diagram illustrating a structure of a time-frequency domain, which is a wireless resource domain in a wireless communication system;
FIG. 6 illustrates a resource grid including a plurality of resource elements (REs) allocated to a physical downlink control channel (PDCCH), a physical downlink shared channel (PDSCH), and a demodulation reference signal (DMRS), according to an embodiment;
FIG. 7 is a graph of mean squared error (MSE) with respect to symbol and subcarrier, according to an embodiment;
FIG. 8 illustrates a resource grid including a plurality of REs allocated to a PDCCH, a PDSCH, and a DMRS, according to an embodiment;
FIG. 9 illustrates a resource grid including an interpolation region and an extrapolation region, according to an embodiment;
FIG. 10 is a flowchart of an operating method of a UE, according to an embodiment;
FIG. 11 is a block diagram of an electronic apparatus according to an embodiment; and
FIG. 12 is a conceptual diagram of an Internet of things (IoT) network system to which embodiments are applied.

DETAILED DESCRIPTION

Hereinafter, embodiments are described in detail with reference to the accompanying drawings. As used herein, an expression "at least one of" preceding a list of elements modifies the entire list of the elements and does not modify the individual elements of the list. For example, an expression, "at least one of a, b, and c" should be understood as including only a, only b, only c, both a and b, both a and c, both b and c, or all of a, b, and c.

Although embodiments are described below in accordance with a wireless communication system based on a new radio (NR) network, embodiments are not limited to the NR network and may be applied to other wireless communication systems (e.g., cellular communication systems, such as long term evolution (LTE), LTE-advanced (LTE-A), wireless broadband (WiBro), or global system for mobile communication (GSM), or local area communication systems using Bluetooth or near field communication (NFC)), which have a similar technical background or channel configuration.

Wireless communication networks of a wireless communication system may support communication among a plurality of wireless communication devices including a wireless communication device by sharing available network resources. For example, information may be transferred through wireless communication networks in various multiple access modes such as a code division multiple access (CDMA) mode, a frequency division multiple access (FDMA) mode, a time division multiple access (TDMA) mode, an orthogonal FDMA (OFDMA) mode, a single carrier FDMA (SC-FDMA) mode, an OFDM-FDMA mode, an OFDM-TDMA mode, and an OFDM-CDMA mode. Hereinafter, the wireless communication system may be referred to as a data communication system.

Various functions described below may be implemented or supported by artificial intelligence (AI) technology or at least one computer program. Each program may include computer-readable program code and is executed in computer-readable media. The term "computer-readable media" includes any types of media, such as read-only memory (ROM), random access memory (RAM), hard disks, compact disks (CDs), digital video disks (DVDs), and other types of memory, which are accessible by a computer. Non-transitory computer-readable media preclude wired, wireless, optical, and other communication links which transmit transitory or other signals. Non-transitory computer-readable media include media, in which data may be permanently stored, and media, such as rewritable optical disks or erasable memory devices, in which data may be stored and overwritten later. For example, non-transitory computer-readable media may include volatile memory and non-volatile memory.

In embodiments described below, a hardware approach is explained as an example. However, the disclosure is not limited thereto, and as such, other embodiments may include a technique using both hardware and software and/or a technique using a software approach. According to an embodiment including a technique using a software approach, the technique may include software program or code, which when executed by a processor, may perform one or more operations implemented in embodiments using the hardware approach.

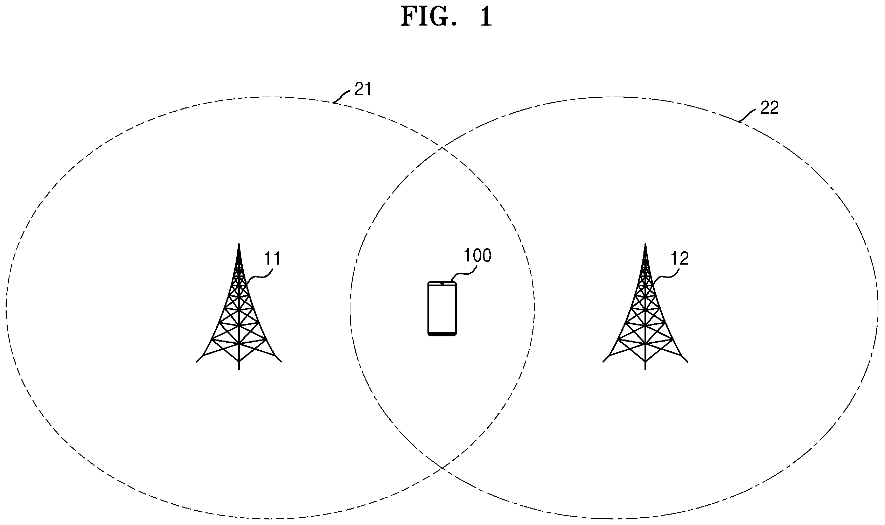

FIG. 1 is a block diagram of a wireless communication system according to an embodiment.

Referring to FIG. 1, the wireless communication system may include a first cell 11, a user equipment (UE) 100, and a second cell 12. Each of the first cell 11 and the second cell 12 may usually refer to a fixed station, which communicates with the UE 100 and/or another cell, and may exchange data and control information with the UE 100 and/or another cell through communication. For example, each of the first cell 11 and the second cell 12 may include, but is not limited to, a base station, a Node B, an evolved-Node B (eNB), a next generation Node B (gNB), a sector, a site, a base transceiver system (BTS), an access point (AP), a relay node, a remote radio head (RRH), a radio unit (RU), a small cell, an apparatus, or the like.

The UE 100 may be stationary or mobile and may refer to a device that may transmit data and/or control information to one of the first and second cells 11 and 12 and receive data and/or control information from one of the first and second cells 11 and 12. For example, the UE 100 may include, but is not limited to, a terminal, a terminal equipment, a mobile station (MS), a mobile terminal (MT), a user terminal (UT), a subscriber station (SS), a wireless communication device, a wireless device, a device, a handheld device, or the like.

The first cell 11 may provide wireless internet (e.g. wireless broadband (WiBro)) access to the UE 100 in a coverage 21 of the first cell 11. Here, the first cell 11 communicating with the UE 100 may be referred to as a serving cell. The second cell 12 may have a second coverage 22. The second cell 12 may be adjacent to the UE 100, and the UE 100 may receive undesirable interference from the second cell 12. Here, the second cell 12 may be referred to as an interference cell 12 with respect to the UE 100. Although embodiments are described assuming that there is one interference cell 12 with respect to the UE 100, this is just an example for convenience of description. The disclosure is not limited thereto, and as such, according to another embodiment, there may be a plurality of interference cells affecting the UE 100. It will be fully understood that the technical ideas of the disclosure may be applied even when there are a plurality of interference cells.

Here, interference may include spatially correlated interference. Spatially correlated interference is one of the factors that degrade the wireless communication performance of the UE 100 by affecting the whole and/or part of the bandwidth of a system by amplifying the power of a reception signal by adding an undesirable signal to the reception signal. Here, spatially correlated interference may be referred to as colored noise. Colored noise may be noise in which power is distributed unevenly across frequencies. Spatially correlated interference may refer interference generated from the interference cell 12 or other nearby wireless communication devices (e.g., other UEs), but the disclosure is not limited thereto. For example, spatially correlated interference may refer to interference occurring within the UE 100. The UE 100 including a plurality of antennas may receive signals through a plurality of ranks. In an example case in which pieces of noise of signals received through different ranks are correlated with each other, noise in an entire frequency band for reception signals may not be constant due to the correlation. In other words, noise may be unusually large in a particular frequency band.

The interference described above may be unexpected and may cause degradation of wireless communication performance of the UE 100. According to an embodiment, the UE 100 may perform interference whitening to filter colored noise such that the colored noise is similar to white noise (e.g. noise in which power is distributed evenly across frequencies), thereby increasing wireless communication performance. In this manner, because pieces of white noise are not correlated with each other, data estimation accuracy for received signals may be increased.

The UE 100 may receive a demodulation reference signal (DMRS) and a physical downlink shared channel (PDSCH) from the first cell 11. The UE 100 may generate a first whitening filter to filter interference in the PDSCH based on the DMRS. The UE 100 may generate a plurality of estimate values respectively for a plurality of resource elements (REs) allocated to the PDSCH, based on the first whitening filter. The UE 100 may generate a second whitening filter to filter interference in the PDSCH, based on some of the estimate values. The UE 100 may generate a plurality of data values respectively for the REs allocated to the PDSCH, based on the second whitening filter.

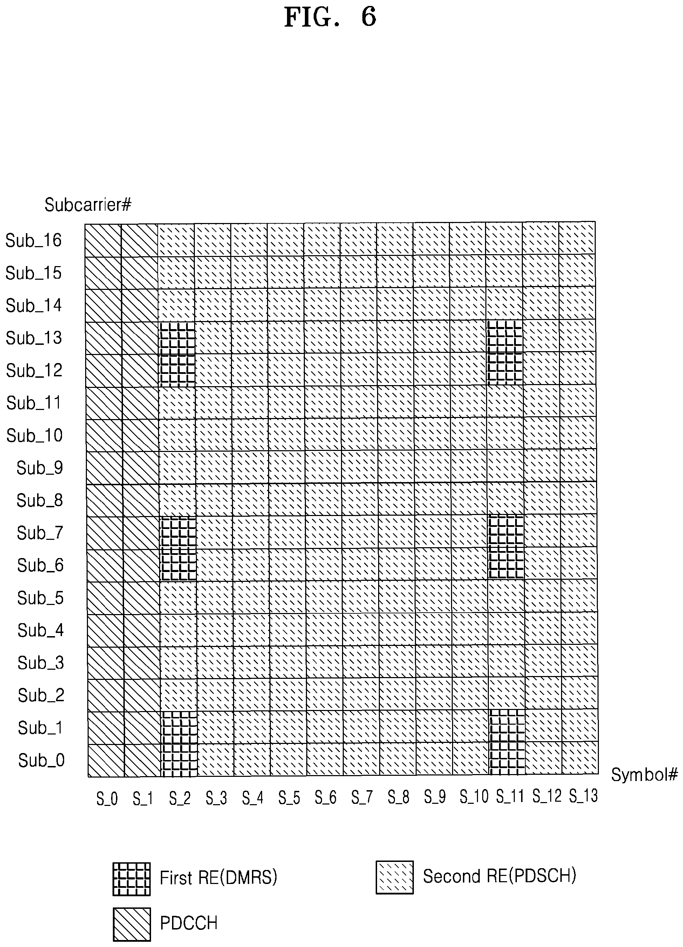

Hereinafter, some estimate values selected from a plurality of estimate values may be referred to as sample estimate values, and unselected estimate values may be referred to as non-sample estimate values. An RE corresponding to a sample estimate value may be referred to as a sample RE, and an RE corresponding to a non-sample estimate value may be referred to as a non-sample RE. The sample RE and the non-sample RE are described in detail with reference to FIGS. 6 to 8 below.

The UE 100 may determine a sample estimate value among a plurality of estimate values corresponding to a PDSCH, based on at least one of a Doppler frequency (e.g. a Doppler shift), a delay spread and the number of DMRSs in one resource block (RB), with respect to the channel of a received signal. For example, the UE 100 may determine the positions and/or number of sample REs, based on at least one of a Doppler frequency (e.g. a Doppler shift), a delay spread, and the number of DMRSs included in an RB. Accordingly, the number and/or positions of sample REs may vary with a Doppler frequency, a delay spread, and the number of DMRSs in one RB. For example, in an example case in which a Doppler frequency of a channel is high, the difference between a channel estimate value and an ideal channel value may be large, and thus, the number of highly reliable estimate values may be small. Accordingly, the number of sample estimate values may be relatively small. However, the disclosure is not limited thereto, and as such, according to another embodiment, the UE 100 may determine a sample estimate value among a plurality of estimate values corresponding to a PDSCH, based on one selected from a group including, but not limited to, a Doppler frequency (e.g. a Doppler frequency shift), a delay spread and the number of DMRSs in one resource block (RB).

The UE 100 may calculate channel estimation mean square error (CE MSE) between an estimated channel and a reference channel. The reference channel may be an ideal channel or a predetermined channel. The CE MSE is a method for measuring CE error and is a value obtained by measuring an MSE between a channel estimate value and an ideal channel value. The UE 100 may calculate CE MSE with respect to a plurality of channel estimate values and may determine the number and/or positions of sample REs based on the calculated CE MSE. The CE MSE may increase as a Doppler frequency (e.g. a Doppler shift) and a delay spread increase and the number of DMRSs in an RB decreases. According to an embodiment, the number of sample estimate values may decrease as the CE MSE increases. For example, the number of sample estimate values may be a number of sample REs.

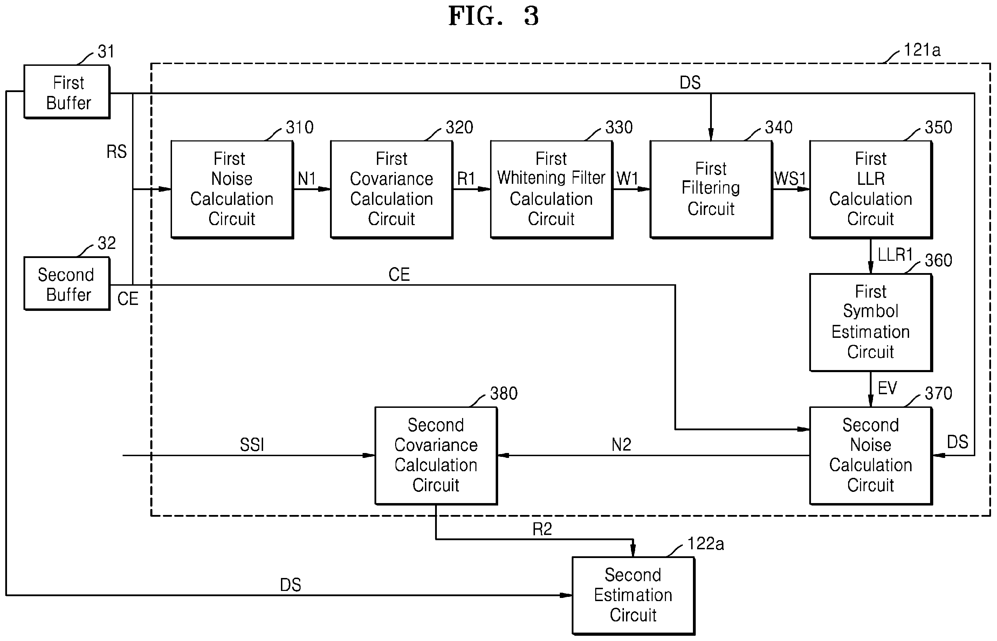

The UE 100 may determine, as a sample RE, an RE in a sample region. For example, the UE 100 may determine, as the sample RE, the RE in the sample region based on the environment of a communication channel. Here, the sample region may refer to a region in a resource grid including sample REs. For example, the sample region may be predetermined region determined through pre-simulation. The UE 100 may determine a sample region corresponding to each of a plurality of scenarios (e.g., a plurality of scenarios by degrees of Doppler frequency) through pre-simulation. The UE 100 may store information about the sample region (e.g., information about a frequency band and symbol period of a region) and may determine, as a sample estimate value, an estimate value corresponding to an RE in a sample region corresponding to the channel environment (e.g., an environment having a high Doppler frequency) of a received signal. In other words, the UE 100 may measure a channel environment (e.g., a Doppler frequency) and may determine a sample estimate value selected from among a plurality of estimate values based on information (e.g., SSI in FIG. 3) about a sample region corresponding to the channel environment. The sample region described above is described in detail with reference to FIGS. 6 to 9 below.

Although it is described herein for convenience that the number and/or the positions of sample REs is determined based on CE MSE, the disclosure is not limited thereto. For example, the UE 100 may determine the number and/or positions of sample REs considering error of at least one of gain control and a radio frequency (RF) filter. For example, in a case in which error in gain control and an RF filter is large, the UE 100 may generate a second whitening filter based on a relatively small number of sample REs.

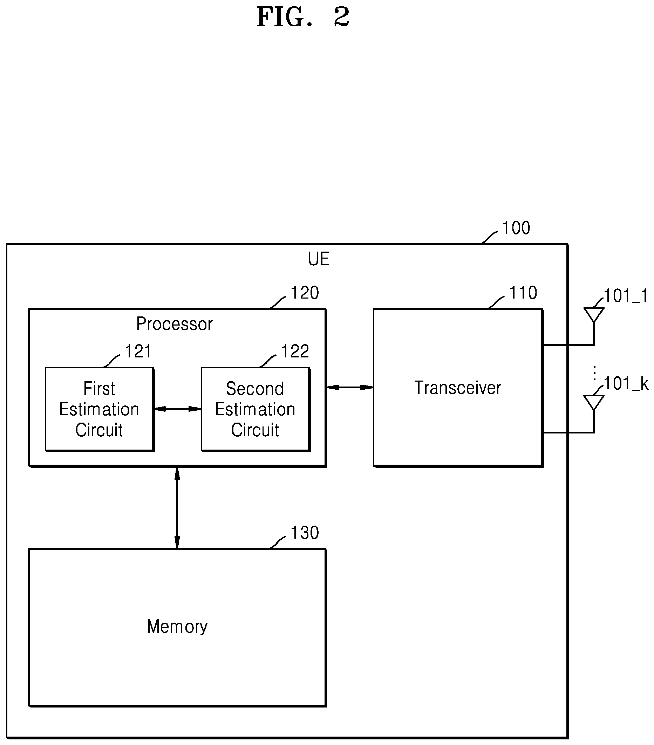

FIG. 2 is a block diagram of the UE 100 according to an embodiment.

The UE 100 of FIG. 2 corresponds to the UE 100 in FIG. 1, and thus, redundant descriptions thereof are omitted.

Referring to FIG. 2, the UE 100 may include a plurality of antennas 101_1 to 101_k, a transceiver 110, a processor 120, and a memory 130. According to an embodiment, the transceiver 110 and the processor 120 may be included in a semiconductor device. For example, the semiconductor device may include, but is not limited to an integrated circuit (IC) chip or a modem chip. According to an embodiment, the transceiver 110, the processor 120, and the memory 130 may be included in a single modem chip. However, the disclosure is not limited thereto, and as such, according to another embodiment, one or more of the transceiver 110, the processor 120, and the memory 130 may be provided on different chips.

For convenience of description, it is assumed that the UE 100 performs sample RE determination, whitening filter generation, interference whitening, and the like. However, according to an embodiment, operations, such as sample RE determination, whitening filter generation, and interference whitening, may be performed by using the transceiver 110, the processor 120, and the memory 130, and therefore, it will be understood that a modem chip performs sample RE determination, whitening filter generation, and interference whitening. Accordingly, it will be understood that the UE 100 according to an embodiment of the disclosure includes a modem chip performing operations described below.

The UE 100 may access a wireless communication system by transmitting and receiving signals through at least one of the antennas 101_1 to 101_k. The transceiver 110 may transmit and receive symbol vectors through at least one of the antennas 101_1 to 101_k. In other words, at least some of the antennas 101_1 to 101_k may correspond to transmission antennas and at least some of the other antennas among the antennas 101_1 to 101_k may correspond to reception antennas. A transmission antenna may transmit a signal to an external device (e.g., another wireless communication device or a base station (BS)) other than the UE 100. A reception antenna may receive a radio signal from the external device.

The transceiver 110 may receive a downlink signal from a cell through the antennas 101_1 to 101_k. The transceiver 110 may generate intermediate-frequency or baseband signals by performing frequency down-conversion of the downlink signal.

According to an embodiment, the transceiver 110 may receive a DMRS that is allocated a plurality of first REs. The transceiver 110 may also receive a PDSCH that is allocated a plurality of second REs.

The processor 120 may generally control operations of the UE 100. For example, the processor 120 may include a central processing unit (CPU). The processor 120 may include a single-core processor or a multi-core processor. The processor 120 may process or execute programs and/or data, which are stored in the memory 130. In an embodiment, the processor 120 may control various functions of the UE 100 or perform various operations, by executing programs stored in the memory 130.

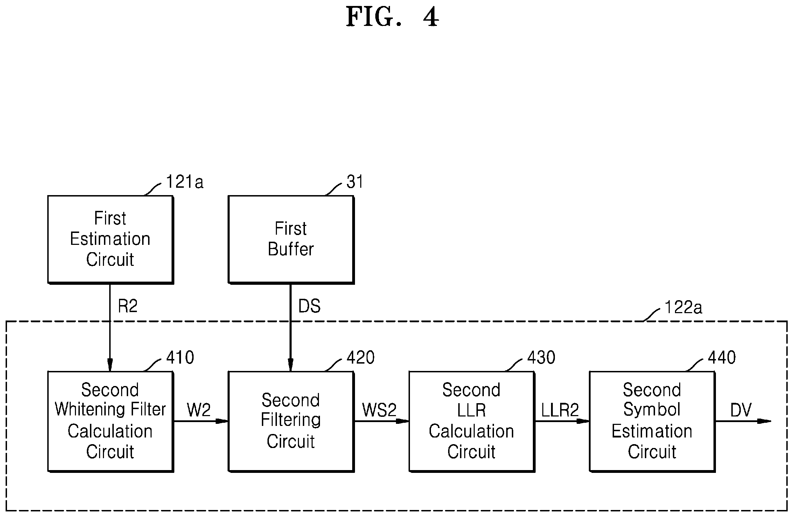

The processor 120 may be configured to generate a data value for the received downlink signal by filtering, decoding, and/or digitizing intermediate-frequency signals or baseband signals. The processor 120 may perform a certain operation based on the data value. The data value may refer to a value estimated by the processor 120. An operation in which the UE 100 according to an embodiment of the disclosure estimates the data value is described with reference to FIG. 4 below.

The processor 120 may be configured to encode, multiplex, and/or convert into analog data signals generated through a certain operation. The transceiver 110 may perform frequency up-conversion of intermediate-frequency or baseband signals output from the processor 120 and transmit an uplink signal, which results from the frequency up-conversion, through the antennas 101_1 to 101_k. However, this is just an example, and the disclosure is not limited thereto. The UE 100 may further include an additional integrated circuit, which is configured to perform part of the operation of the processor 120 described above.

According to an embodiment, the processor 120 may include a first estimation circuit 121 and a second estimation circuit 122.

According to an embodiment, the first estimation circuit 121 may generate a first whitening filter for whitening (or filtering) interference in a PDSCH, based on a DMRS that is allocated a plurality of first REs. The first estimation circuit 121 may perform filtering of a PDSCH that is allocated a plurality of second REs, based on the first whitening filter, and may generate a plurality of estimate values by estimating data with respect to the PDSCH. Here, the estimate values may refer to estimate value of data with respect to the PDSCH, as described above. The first estimation circuit 121 may determine, as sample estimate values, some of the plurality of estimate values, based on a channel environment (e.g., at least one of a Doppler frequency and a delay spread). As described above, the number and/or positions of one or more second REs (e.g., sample REs) corresponding to at least one determined sample estimate value may have been determined by plurality of scenarios (e.g., a scenario according to a first Doppler frequency and a scenario according to a second Doppler frequency) through pre-simulation. The first estimation circuit 121 may generate a second noise plus interference (NI) covariance matrix to perform whitening (or filtering) of interference in the PDSCH, based on a sample RE. The first estimation circuit 121 may output the second NI covariance matrix to the second estimation circuit 122. The first estimation circuit 121, the first whitening filter, and the second whitening filter are described in detail with reference to FIG. 3 below.

The second estimation circuit 122 may receive, from the first estimation circuit 121, the second NI covariance matrix used to generate a second whitening filter. The second estimation circuit 122 may generate the second whitening filter based on the second NI covariance matrix, estimate a PDSCH, which is allocated a plurality of second REs, based on the second whitening filter, and generate a plurality of data values. A second estimation circuit is described in detail with reference to FIG. 4 below.

According to an embodiment, the memory 130 may store information about the number and/or positions of sample REs, according to pre-simulation. The memory 130 may transmit the information about the number and/or positions of sample REs to the processor 120 at the request of the processor 120. The processor 120 may generate the second whitening filter described above, based on the information about the number and/or positions of sample REs, wherein the information is received from the memory 130.

FIG. 3 is a block diagram illustrating a first estimation circuit according to an embodiment.

According to an embodiment, a first estimation circuit 121a illustrated in FIG. 3 corresponds to the first estimation circuit 121 described with reference to FIG. 2 above, and thus, redundant descriptions thereof are omitted.

Referring to FIG. 3, according to an embodiment, the first estimation circuit 121a may include a first noise calculation circuit 310, a first covariance calculation circuit 320, a first whitening filter calculation circuit 330, a first filtering circuit 340, a first log likelihood ratio (LLR) calculation circuit 350, a first symbol estimation circuit 360, a second noise calculation circuit 370, and a second covariance calculation circuit 380.

According to an embodiment, a first buffer 31 may store and output a received signal. The first buffer 31 may store and output a reference signal RS and a data signal DS to the first estimation circuit 121a. For example, the first buffer 31 may store and output the DMRS and the PDSCH, which are described above. It may be described with reference to FIGS. 1 and 2 above and below that the reference signal RS and the data signal DS may respectively refer to the DMRS and the PDSCH, but this is just an example and the disclosure is not limited thereto. For convenience of description, it may be assumed that the first buffer 31 stores and outputs the DMRS and the PDSCH to the first estimation circuit 121a and a second estimation circuit (122a in FIG. 4). A signal received through the transceiver 110 in FIG. 2 may be given by Equation 1.

[Equation 1]

$$\mathbf{y} = \mathbf{Hx} + \mathbf{v}$$

In an example case in which $n_t$ is the number of transmission antennas (e.g., the number of antennas of the first cell 11 in FIG. 1) and $n_r$ is the number of reception antennas (e.g., the number of antennas of the UE 100 in FIG. 1), y is a reception signal vector having a size of $n_r \times 1$, H is a channel matrix having a size of $n_r \times n_t$, x is a transmission signal vector having a size of $n_t \times 1$, and v is a noise and interference vector (e.g., an NI vector) having a size of $n_r \times 1$, in Equation 1. In an example case in which the transmission signal vector **x** is a DMRS, a UE may estimate the channel matrix **H** because the transmission signal vector **x** and the reception signal vector **y** may be known. An estimated channel matrix may be expressed as $\hat{\mathbf{H}}$ and may be referred to as a channel estimate matrix CE. As described above, the reception signal vector **y** and the transmission signal vector **x** may correspond to a DMRS, and the channel estimate matrix CE may be obtained by estimating the channel of the DMRS.

According to an embodiment, a second buffer 32 stores the channel estimate matrix CE. The second buffer 32 may output the channel estimate matrix CE to the first estimation circuit 121a. The channel estimate matrix CE may be calculated by the processor 120 described above with reference to FIG. 2.

According to an embodiment, the first noise calculation circuit 310 may receive the reference signal RS from the first buffer 31 and the channel estimate matrix CE from the second buffer 32. The first noise calculation circuit 310 may generate a first NI vector N1, based on the reference signal RS and the channel estimate matrix CE.

The first NI vector N1 may correspond to the NI vector **v** in Equation 1. The first NI vector N1 may include, but is not limited to, intra-cell interference, inter-cell interference, and noise. In an example case in which a single strong interferer having $n_i$ antennas is determined, the NI vector **v** may be given by Equation 2.

[Equation 2]

$$\mathbf{v} = \mathbf{H}_I \mathbf{x}_I + \mathbf{n}$$

In Equation 2, $\mathbf{H}_I$ is an interference channel matrix having a size of $n_r \times n_i$, $\mathbf{x}_I$ is an interference signal vector including a unit variance having a size of $n_i \times 1$, and **n** is an additive white Gaussian noise (AWGN) vector, $\sigma^2 \mathbf{I}$.

The first noise calculation circuit 310 may output the first NI vector N1 to the first covariance calculation circuit 320. The first covariance calculation circuit 320 may receive the first NI vector N1 and calculate a first NI covariance matrix R1 based on the first NI vector N1.

The NI vector **v** described through Equation 1 and Equation 2 may be expressed as colored noise rather than white noise due to interference. Accordingly, an NI covariance matrix may be given by Equation 3. Equation 3 may be understood through Equation 1 and Equation 2.

[Equation 3]

$$\mathbf{R} = \mathrm{E}\{\mathbf{v}\mathbf{v}^H\} = \mathbf{H}_I \mathbf{H}_I^H + \sigma^2 \mathbf{I}$$

Where $\mathbf{v}^H$ is the Hermitian of the NI vector v. According to an embodiment, because the UE does not know the covariance matrix **R**, assuming that the statistical characteristics of NI do not change in one RB, NI in an RE allocated to the reference signal RS may be estimated using Equation 4.

[Equation 4]

$$\begin{aligned}
\hat{\mathbf{R}} &= \mathrm{E}\{\hat{\mathbf{v}}\hat{\mathbf{v}}^H\} \\
&= \mathrm{E}\left\{(\mathbf{y} - \hat{\mathbf{H}}\mathbf{x})(\mathbf{y} - \hat{\mathbf{H}}\mathbf{x})^H\right\} \\
&= \frac{1}{|S|} \sum_{(k,l) \in S} \left(\mathbf{y}(k,l) - \hat{\mathbf{H}}(k,l)\mathbf{x}(k,l)\right)\left(\mathbf{y}(k,l) - \hat{\mathbf{H}}(k,l)\mathbf{x}(k,l)\right)^H
\end{aligned}$$

In Equation 4, $\hat{\mathbf{R}}$ is an estimated NI covariance matrix, S is the number of REs allocated to a received signal (e.g., a DMRS or a PDSCH) to estimate a covariance of the RB, k is a subcarrier index, and l is the position of an RE having the symbol index. As described above, $\hat{\mathbf{H}}$ is a channel estimate matrix and may include a channel estimate value corresponding to each of a plurality of first REs allocated to a DMRS.

As described above, the first covariance calculation circuit 320 may receive the first NI vector N1 from the first noise calculation circuit 310. Based on the description given through Equation 3 and Equation 4, the first covariance calculation circuit 320 may calculate the first NI covariance matrix R1. The first NI covariance matrix R1 may be a covariance matrix for the first NI vector N1.

The first covariance calculation circuit 320 may output the first NI covariance matrix R1 to the first whitening filter calculation circuit 330. The first whitening filter calculation circuit 330 may calculate a first whitening filter W1 based on the first NI covariance matrix R1. According to an embodiment, a process in which the first whitening filter calculation circuit 330 calculates the first whitening filter W1 based on the first NI covariance matrix R1 may be understood with reference to Equations 5 to 8. Equations 5 to 8 may be understood with reference to Equation 4.

[Equation 5]

$$\hat{\mathbf{R}} = \mathbf{L}\mathbf{L}^{H}$$

[Equation 6]

$$\mathbf{L}^{-1}\mathbf{y} = \mathbf{L}^{-1}\mathbf{H}\mathbf{x} + \mathbf{L}^{-1}\mathbf{v}$$

[Equation 7]

$$\begin{aligned}
E\{(\mathbf{L}^{-1}\mathbf{v})(\mathbf{L}^{-1}\mathbf{v})^{H}\} &= \mathbf{L}^{-1}E\{\mathbf{v}\mathbf{v}^{H}\}(\mathbf{L}^{-1})^{H} \\
&= \mathbf{L}^{-1}E\{(\mathbf{y}-\mathbf{H}\mathbf{x})(\mathbf{y}-\mathbf{H}\mathbf{x})^{H}\}(\mathbf{L}^{-1})^{H} \\
&= \mathbf{L}^{-1}E\left\{(\mathbf{y}-\hat{\mathbf{H}}\mathbf{x})(\mathbf{y}-\hat{\mathbf{H}}\mathbf{x})^{H}\right\}(\mathbf{L}^{-1})^{H} \\
&= \mathbf{L}^{-1}E\{\mathbf{v}\mathbf{v}^{H}\}(\mathbf{L}^{-1})^{H} \\
&= \mathbf{L}^{-1}\hat{\mathbf{R}}(\mathbf{L}^{-1})^{H} \\
&= \mathbf{L}^{-1}\mathbf{L}\mathbf{L}^{H}(\mathbf{L}^{-1})^{H} \\
&= \mathbf{L}^{-1}\mathbf{L}(\mathbf{L}^{-1}\mathbf{L})^{H} = \mathbf{I}
\end{aligned}$$

[Equation 8]

$$\mathbf{W} = \mathbf{L}^{-1}$$

As described above, $\hat{\mathbf{R}}$ is the estimated NI covariance matrix. $\hat{\mathbf{R}}$ may also be an Hermitian matrix and a positive-definite matrix. Accordingly, Cholesky decomposition may be applied to the estimated NI covariance matrix $\hat{\mathbf{R}}$. In other words, the estimated NI covariance matrix $\hat{\mathbf{R}}$ may be given by Equation 5.

In Equations 5 to 8, $\mathbf{L}$ is a triangular matrix in which a diagonal element is positive (e.g. the diagonal elements are real positive values). In Equation 6, the calculation includes multiplying the reception signal vector $\mathbf{y}$ by the inverse matrix of $\mathbf{L}$. The covariance matrix of $\mathbf{L}^{-1}\mathbf{v}$ may be expressed as a unit matrix. Assuming $\hat{\mathbf{H}} = \mathbf{H}$, $\mathbf{L}^{-1}\mathbf{v}$ may be expressed as whitened noise plus interference given by Equation 7. Accordingly, a whitening filter (or referred to as a whitening matrix) for alleviating or eliminating interference (e.g., colored noise) may be given by Equation 8. The whitening filter $\mathbf{W}$ may be determined from the estimated NI covariance matrix $\hat{\mathbf{R}}$ using Cholesky decomposition. The whitening filter $\mathbf{W}$ may be determined by determining the triangular matrix $\mathbf{L}$ from the estimated NI covariance matrix $\hat{\mathbf{R}}$. For instance, $\mathbf{L}$ may be determined numerically.

Accordingly, the first whitening filter calculation circuit 330 may generate the first whitening filter W1 based on a channel estimate value corresponding to each of a plurality of first REs allocated to a DMRS.

The first filtering circuit 340 may receive the first whitening filter W1 from the first whitening filter calculation circuit 330. The first filtering circuit 340 may perform interference whitening on the data signal DS, based on the first whitening filter W1. For example, the first filtering circuit 340 may perform interference filtering with respect to a PDSCH. Interference whitening may be understood through Equation 6. That is, the first whitening filter W1 may be applied to the received signal y. The first filtering circuit 340 may generate a first whitened signal WS1 by performing interference whitening on the data signal DS based on the first whitening filter W1. For example, the first whitened signal WS1 may be referred to as a first filtered signal. According to an embodiment, the first filtering circuit 340 may generate the first filtered signal by performing interference filtering on the data signal DS based on the first whitening filter W1.

The first LLR calculation circuit 350 may receive the first whitened signal WS1 from the first filtering circuit 340 and obtain a plurality of first LLR values LLR1. For decoding of the first whitened signal WS1, the first LLR calculation circuit 350 may calculate the plurality of first LLR values LLR1 respectively corresponding to a plurality of second REs allocated to the data signal DS. For example, the first LLR calculation circuit 350 may calculate the first LLR values LLR1 corresponding to the bit sequence of the PDSCH. For example, the first LLR values LLR1 may be obtained based on the first whitened signal WS1. An LLR may refer to a value for mapping a received symbol to a corresponding bit. The LLR may be generated based on a Euclidean distance between constellation points according to the received symbol and a modulation method.

The first symbol estimation circuit 360 may receive the first LLR values LLR1 from the first LLR calculation circuit 350. The first symbol estimation circuit 360 may generate a plurality of estimate values EV respectively corresponding to the second REs allocated to the data signal DS, based on the first LLR values LLR1.

For example, the first symbol estimation circuit 360 may generate the estimate values EV respectively corresponding to the second REs allocated to the PDSCH, based on the first LLR values LLR1. The first symbol estimation circuit 360 may generate a bit sequence corresponding to the PDSCH, based on the first LLR values LLR1. For example, the first symbol estimation circuit 360 may generate the bit sequence corresponding to the PDSCH by mapping the PDSCH to 1 or 0 based on the sign of each of the first LLR values LLR1. The first symbol estimation circuit 360 may generate the estimate values EV respectively corresponding to the second REs allocated to the PDSCH, by converting the bit sequence corresponding to the PDSCH into a symbol according to the modulation method of the PDSCH.

The second noise calculation circuit 370 may receive the estimate values EV from the first symbol estimation circuit 360. The second noise calculation circuit 370 may receive the data signal DS from the first buffer 31. The second noise calculation circuit 370 may receive the channel estimate matrix CE from the second buffer 32.

The operation of the second noise calculation circuit 370 may be similar to the operation of the first noise calculation circuit 310. As such, the operation of the second noise calculation circuit 370 will be understood through the descriptions of the first noise calculation circuit 310, and redundant description will be omitted.

However, while the first noise calculation circuit 310 generates the NI vector (e.g., the first NI vector N1) with respect to the reference signal RS, the second noise calculation circuit 370 may generate an NI vector with respect to the data signal DS. The second noise calculation circuit 370 may generate a second NI vector N2 based on the data signal DS, the channel estimate matrix CE, and the estimate values EV. The second NI vector N2 may be given by Equation 9.

[Equation 9]

$$\tilde{\mathbf{v}}(m) = \mathbf{y}(m) - \hat{\mathbf{H}}\tilde{\mathbf{x}}_d(m)$$

.

In Equation 9, $\tilde{\mathbf{v}}(m)$ is NI for an m-th RE allocated to the data signal DS, $\mathbf{y}(m)$ is a received symbol for the m-th RE allocated to the data signal DS, $\tilde{\mathbf{x}}_d(m)$ is an estimate value for the m-th RE allocated to the data signal DS, and $\hat{\mathbf{H}}$ is the channel estimate matrix CE described above.

The second covariance calculation circuit 380 may receive the second NI vector N2 for the data signal DS from the second noise calculation circuit 370. The second covariance calculation circuit 380 may receive a sample selection information SSI. For example, the second covariance calculation circuit 380 may receive the sample selection information SSI from the memory 130 (in FIG. 2). The second covariance calculation circuit 380 may calculate a second NI covariance matrix R2 based on the second NI vector N2 and the sample selection information SSI.

The sample selection information SSI may be information about the number and/or positions of sample REs determined based on the state of a channel for a received signal. For example, the sample selection information SSI may include information about a sample RE determined based on at least one a Doppler frequency, a delay spread, and the number of DMRSs in one RB. As described above, a UE according to an embodiment of the disclosure may predetermine the number and/or positions of sample REs corresponding to the state of a certain channel, through pre-simulation, and may store information about the number and/or positions of sample REs.

The operation of the second covariance calculation circuit 380 is similar to the operation of the first covariance calculation circuit 320. As such, the operation of the second covariance calculation circuit 380 will be understood through the descriptions of the first covariance calculation circuit 320, and redundant description will be omitted.

However, while the first covariance calculation circuit 320 generates the NI covariance matrix (e.g., the first NI covariance matrix R1) for the reference signal RS, the second covariance calculation circuit 380 may generate the NI covariance matrix for the data signal DS. The second covariance calculation circuit 380 may generate the second NI covariance matrix R2 based on the second NI vector N2. The second NI covariance matrix R2 may be given by Equation 10. Equation 10 may be understood through Equation 4 and Equation 9 described above.

[Equation 10]

$$\hat{\mathbf{R}}_{SCH} = \frac{1}{M}\sum_{m=1}^{M}\big(\hat{\mathbf{v}}(m)\big)\big(\hat{\mathbf{v}}(m)\big)^{H}$$

$$= \frac{1}{M}\sum_{m=1}^{M}\big(\mathbf{y}(m)-\hat{\mathbf{H}}(m)\hat{\mathbf{x}}_{d}(m)\big)\big(\mathbf{y}(m)-\hat{\mathbf{H}}(m)\hat{\mathbf{x}}_{d}(m)\big)^{H}$$

.

In Equation 10, $\hat{\mathbf{R}}_{SCH}$ is the second NI covariance matrix R2. For example, $\hat{\mathbf{R}}_{SCH}$ may be the second NI covariance matrix R2 for the PDSCH. M is the number of one or more sample REs selected from the second REs allocated to the PDSCH.

The second covariance calculation circuit 380 may output the second NI covariance matrix R2 to the second estimation circuit 122a. The first buffer 31 may output the data signal DS to the second estimation circuit 122a. For example, the first buffer 31 may output the PDSCH to the second estimation circuit 122a.

Equations 1 to 10 described above are only intended for help with understanding of the operation of a UE according to an embodiment of the disclosure. However, the disclosure is not limited thereto, and as such, according to another embodiment, one or more of the equations 1 to 10 may be modified.

According to an embodiment, a UE may generate a second whitening filter (W2 in FIG. 4) having improved interference whitening performance by generating the second NI covariance matrix R2 based on at least one sample RE selected from the second REs allocated to the data signal DS.

For convenience of description, the first noise calculation circuit 310, the first covariance calculation circuit 320, the first whitening filter calculation circuit 330, the first filtering circuit 340, the first LLR calculation circuit 350, the first symbol estimation circuit 360, the second noise calculation circuit 370, and the second covariance calculation circuit 380 are illustrated as separate components. However, the disclosure is not limited thereto. It will be easily understood by one of ordinary skill that components included in the first estimation circuit 121a according to an embodiment may be implemented in a single circuit. Although it is illustrated for convenience of description that the first buffer 31 and the second buffer 32 are not included in the first estimation circuit 121a, the disclosure is not limited thereto. As such, according to an embodiment, the first buffer 31 and the second buffer 32 may be included in the first estimation circuit 121a and may be implemented in a single circuit together with the components of the first estimation circuit 121a. According to an embodiment, one or more other components may be included or omitted from the first estimation circuit 121a illustrated in FIG. 3.

Although it is illustrated in FIG. 3 that the second covariance calculation circuit 380 receives the sample selection information SSI, the disclosure is not limited thereto. For example, the second noise calculation circuit 370 may receive the sample selection information SSI, determine at least one sample estimate value among the estimate values EV, and generate the second NI vector N2 for the sample estimate value based on the sample estimate value. Accordingly, in an embodiment, to increase whitening performance and reduce power and time consumed for filter generation, a UE may determine at least one sample estimate value judged to have a relatively high reliability, rather than the plurality of estimate values EV, to generate a whitening filter, in a particular stage and/or without being limited to a stage.

FIG. 4 is a block diagram illustrating the second estimation circuit 122a according to an embodiment.

According to an embodiment, the second estimation circuit 122a in FIG. 4 corresponds to the second estimation circuit 122 described with reference to FIG. 2 above, and thus, redundant descriptions thereof are omitted.

Referring to FIG. 4, the second estimation circuit 122a may include a second whitening filter calculation circuit 410, a second filtering circuit 420, a second LLR calculation circuit 430, and a second symbol estimation circuit 440. As described above, the second estimation circuit 122a may receive the second NI covariance matrix R2 from the first estimation circuit 121a. For example, the second estimation circuit 122a may receive the second NI covariance matrix R2 from the second covariance calculation circuit 380 of the first estimation circuit 121a. The second estimation circuit 122a may also receive the data signal DS from the first buffer 31.

The second whitening filter calculation circuit 410 may receive the second NI covariance matrix R2 from the first estimation circuit 121a. The second whitening filter calculation circuit 410 may generate a second whitening filter W2 based on the second NI covariance matrix R2.

The operation of the second whitening filter calculation circuit 410 is similar to the operation of the first whitening filter calculation circuit 330. As such, the operation of the second whitening filter calculation circuit 410 will be understood through the descriptions of the first whitening filter calculation circuit 330, and redundant description is omitted.

However, while the first whitening filter calculation circuit 330 generates the first whitening filter W1 applied to the data signal DS, based on the first NI covariance matrix R1 for the reference signal RS, the second whitening filter calculation circuit 410 may generate the second whitening filter W2 applied to the data signal DS, based on the second NI covariance matrix R2 for the data signal DS.

As described above, the first whitening filter W1 may be generated based on the first REs allocated to the reference signal RS. The number of first REs allocated to the reference signal RS is limited. For example, the number of first REs allocated to the reference signal RS may be less than the number of second REs allocated to the data signal DS. Accordingly, the first whitening filter W1 is generated based on the first REs allocated to the reference signal RS and may thus not show satisfactory interference whitening performance for the data signal DS. In addition, because an NI covariance matrix (e.g., R1 in FIG. 3) for the reference signal RS is different from an NI covariance matrix (e.g., R2 in FIG. 3) for the data signal DS, the interference whitening performance of the first whitening filter W1 for the data signal DS may not be satisfactory. As described above, unlike the first whitening filter W1, the second whitening filter W2 may be generated based on the second REs allocated to the data signal DS and thus show satisfactory interference whitening performance for the data signal DS.

However, in an example case in which a whitening filter is generated based on all second REs allocated to the data signal DS, the reliability of the estimate values EV respectively corresponding to the second REs may decrease and power and time consumed to generate the whitening filter may increase. Accordingly, a UE according to one or more embodiments of the disclosure may increase the reliability of the estimate values EV and decrease power and time consumption by generating a whitening filter based on at least one sample RE selected from a plurality of second REs. According to an embodiment, the UE may select at least one RE from the plurality of second REs based on the reliability of the estimate values EV. As described above, the reliability of the estimate values EV may vary with the state of a channel. For example, the reliability of the estimate values EV may be determined based on at least one of a Doppler frequency, a delay spread, and the number of DMRSs in one RB. However, the disclosure is not limited thereto, and as such, according to another embodiment, the reliability of the estimate values EV may be obtained by other information corresponding to or indicating the state of a channel. In an embodiment, the UE may determine a relatively large number of sample REs when there are a relatively large number of DMRSs in one RB.

The operation of the second whitening filter calculation circuit 410 to generate the second whitening filter W2 may be understood through the description made with reference to Equations 5 to 10. The second whitening filter calculation circuit 410 may output the second whitening filter W2 to the second filtering circuit 420.

The second filtering circuit 420 may receive the second whitening filter W2 from the second whitening filter calculation circuit 410. The second filtering circuit 420 may receive the data signal DS from the first buffer 31. The second filtering circuit 420 may perform interference whitening on the data signal DS, based on the second whitening filter W2. For example, the second filtering circuit 420 may perform interference whitening on the PDSCH. The interference whitening may be understood through Equation 6. The second filtering circuit 420 may generate a second whitened signal WS2 by performing interference whitening on the data signal DS based on the second whitening filter W2.

The second LLR calculation circuit 430 may receive the second whitened signal WS2 from the second filtering circuit 420 and output a plurality of second LLR values LLR2. For decoding of the second whitened signal WS2, the second LLR calculation circuit 430 may calculate the plurality of second LLR values LLR2 respectively corresponding to the second REs allocated to the data signal DS. For example, the second LLR calculation circuit 430 may generate the plurality of second LLR values LLR2 based on the second whitened signal WS2. As described above, because the interference whitening performance of the second whitening filter W2 may be superior to that of the first whitening filter W1, the second LLR values LLR2 may be more accurate LLR values for an actual transmission signal than the first LLR values LLR1 in FIG. 3. The second LLR calculation circuit 430 may output the second LLR values LLR2 for the data signal DS to the second symbol estimation circuit 440.

The operation of the second LLR calculation circuit 430 is similar to that of the first LLR calculation circuit 350 and will thus be understood through the descriptions of the first LLR calculation circuit 350.

The second symbol estimation circuit 440 may receive the second LLR values LLR2 from the second LLR calculation circuit 430. The second symbol estimation circuit 440 may generate a plurality of data values DV respectively corresponding to the second REs allocated to the data signal DS, based on the second LLR values LLR2.

The operation of the second symbol estimation circuit 440 is similar to that of the first symbol estimation circuit 360 and will thus be understood through the descriptions of first symbol estimation circuit 360.

For example, the second symbol estimation circuit 440 may generate the plurality of data values DV respectively corresponding to the second REs allocated to the PDSCH, based on the second LLR values LLR2. The second symbol estimation circuit 440 may generate a bit sequence corresponding to the PDSCH, based on the second LLR values LLR2. For example, the second symbol estimation circuit 440 may generate the bit sequence corresponding to the PDSCH by mapping the PDSCH to 1 or 0 based on the sign of each of the second LLR values LLR2. The second symbol estimation circuit 440 may generate the data values DV respectively corresponding to the second REs allocated to the PDSCH by converting the bit sequence corresponding to the PDSCH into a symbol according to the modulation method of the PDSCH. According to an embodiment, a UE may exchange data with a cell (e.g., the first cell 11 in FIG. 1) by generating the data values DV for the received data signal DS.

For convenience of description, the second whitening filter calculation circuit 410, the second filtering circuit 420, the second LLR calculation circuit 430, and the second symbol estimation circuit 440 are illustrated as separate components. However, the disclosure is not limited thereto. It will be easily understood by one of ordinary skill that components included in the second estimation circuit 122a according to an embodiment may be implemented in a single circuit.

Although it has been described with reference to FIGS. 2 to 4 that the first estimation circuit 121a is separate from the second estimation circuit 122a, this is just for convenience of description, and the disclosure is not limited thereto. For example, a first estimation circuit (e.g., 121 in FIG. 2) and a second estimation circuit (e.g., 122 in FIG. 2), which are included in a processor (e.g., 120 in FIG. 2), may be configured as a single circuit. The first buffer 31 (in FIG. 3), the second buffer 32 (in FIG. 3), the first estimation circuit 121a (in FIG. 3), and the second estimation circuit 122a may be configured as a single circuit.

While the above embodiments describe separately determining the first whitening filter and then applying the first whitening filter to the data signal, these steps may be combined. For instance, forward substitution may be applied to directly calculate the estimate values EV = Wy.

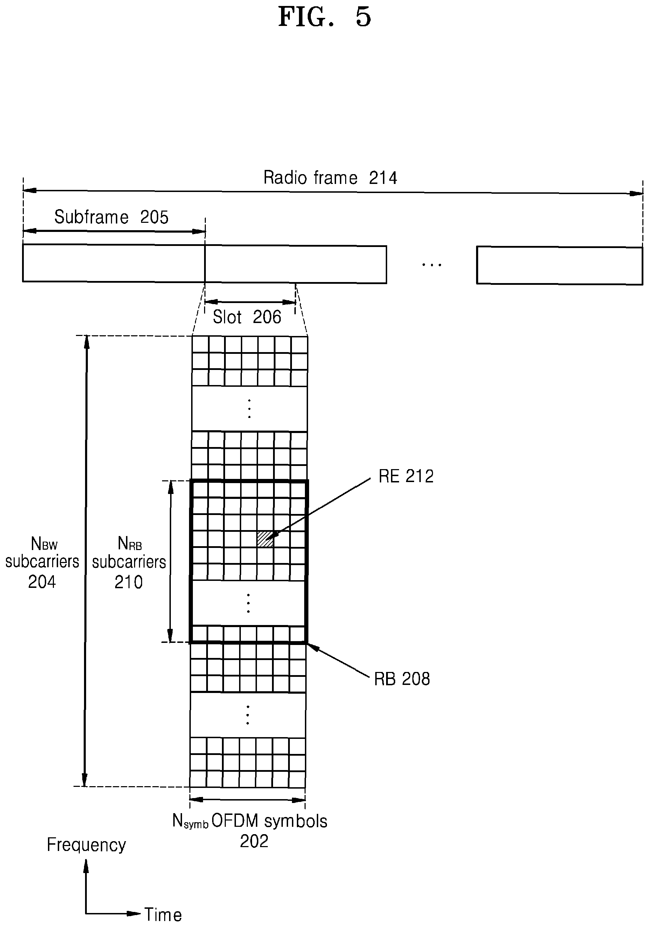

FIG. 5 is a diagram illustrating a structure of a time-frequency domain, which is a wireless resource domain in a wireless communication system. According to an embodiment, the structure of the time-frequency domain in FIG. 5 may be referred to as a basic structure.

Referring to FIG. 5, the horizontal axis is a time domain and the vertical axis is a frequency domain. A minimum transmission unit in the time domain is an orthogonal frequency division multiplexing (OFDM) symbol, and $N_{symb}$ OFDM symbols 202 may constitute a single slot 206. Two slots may constitute a single subframe 205. However, this is just an example, and the number of slots in a single subframe 205 may vary according to another embodiment. For example, the length of the slot 206 may be 0.5 ms, and the length of the subframe 205 may be 1.0 ms. However, this is just an example, and the length of the slot 206 may vary according to another embodiment. The number of slots 206 included in the subframe 205 may vary with the length of the slot 206. The time-frequency domain may be defined based on the slot 206 in an NR network. A radio frame 214 may correspond to a time-domain unit constituted of ten subframes 205.

A minimum transmission unit in the frequency domain is a subcarrier, and a total system transmission bandwidth may include $N_{BW}$ subcarriers 204. A unit of a resource in the time-frequency domain may be an RE 212 and may be represented by an OFDM symbol index and a subcarrier index. The unit of the resource in the time-frequency domain may be referred to as a basic unit. An RB 208 may be defined by $N_{symb}$ OFDM symbols 202 consecutive in the time domain and $N_{RB}$ subcarriers 210 consecutive in the frequency domain. Accordingly, one RB 208 may include $N_{symb}*N_{RB}$ REs 212.

According to an embodiment, in the wireless communication between a UE and a cell, a structure of the time-frequency domain illustrated in FIG. 5 may be used. Hereinafter, for convenience of description, it is assumed that the structure of the time-frequency domain described with reference to FIG. 5 is used. However, the disclosure is not limited thereto.

The description related to FIG. 6 is made with reference to FIG. 5, and as such, redundant description will be omitted. For example, one square in a resource grid of FIG. 6 refers to one RE, as illustrated in FIG. 5.

FIG. 6 illustrates a resource grid including a plurality of REs allocated to a physical downlink control channel (PDCCH), a PDSCH, and a DMRS, according to an embodiment.

As described above, a UE may receive a signal allocated a plurality of REs from a cell. Although the resource grid of FIG. 6 shows first to fourteenth symbols S_0 to S_13 and first to seventeenth subcarriers Sub_0 to Sub_16, this is just for convenience of description, and the disclosure is not limited thereto.

Referring to FIG. 6, a UE may receive the PDCCH allocated the first symbol S_0, the second symbol S_1, and the first to seventeenth subcarriers Sub_0 to Sub_16. The UE may receive the DMRS allocated the third symbol S_2, the twelfth symbol S_11, the first subcarrier Sub_0, the second subcarrier Sub_1, the seventh subcarrier Sub_6, the eighth subcarrier Sub_7, the thirteenth subcarrier Sub_12, and the fourteenth subcarrier Sub_13. Here, a plurality of REs allocated to the DMRS may be referred to a plurality of first REs, as described above. The UE may receive the PDSCH allocated the remaining REs that are allocated to neither the PDCCH nor the DMRS. Here, a plurality of REs allocated to the PDSCH may be referred to as a plurality of second REs, as described above.

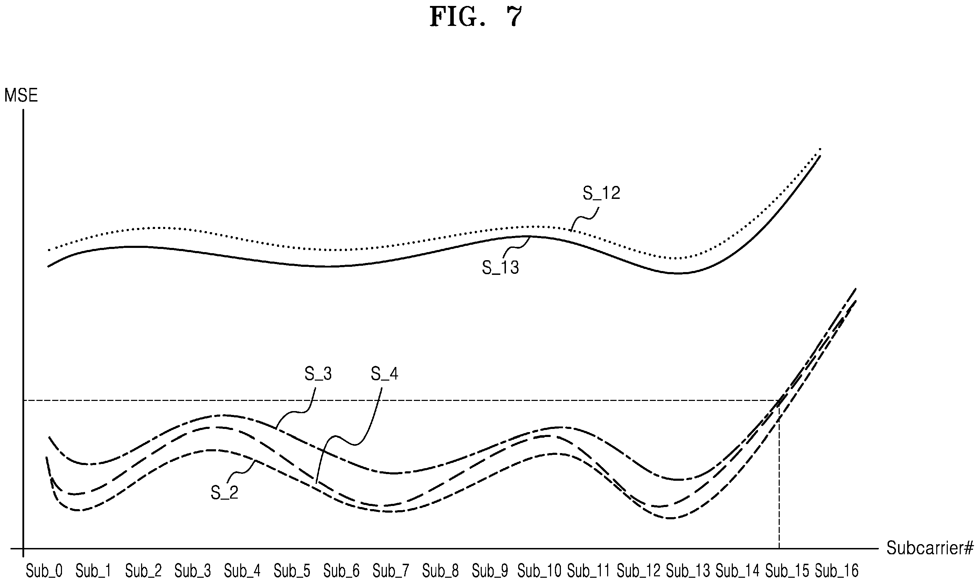

FIG. 7 is a graph of MSE with respect to symbol and subcarrier, according to an embodiment.

As described above, the UE 100 may calculate CE MSE with respect to a plurality of channel estimate values and may determine the number and/or positions of sample REs based on the calculated CE MSE. The CE MSE may increase as a Doppler frequency and a delay spread increase and the number of DMRSs in an RB decreases. According to an embodiment, the number of sample estimate values may decrease as the CE MSE increases. According to an embodiment, the number of sample estimate values may be a number of sample REs.

According to an embodiment, FIG. 7 shows CE MSE (hereafter, referred to as MSE) with respect to the third symbol S_2, the fourth symbol S_3, the fifth symbol S_4, the thirteenth symbol S_12, the fourteenth symbol S_13, and the first to seventeenth subcarriers Sub_0 to Sub_16.

Referring to FIG. 7, the MSE may be relatively high with respect to the thirteenth symbol S_12, the fourteenth symbol S_13, and the first to seventeenth subcarriers Sub_0 to Sub_16. Accordingly, a UE may determine that the reliability of a plurality of estimate values (EV in FIG. 3) respectively corresponding to a plurality of REs, which correspond to the thirteenth symbol S_12, the fourteenth symbol S_13, and the first to seventeenth subcarriers Sub_0 to Sub_16, is low.

Referring to FIG. 7, the MSE may be relatively high with respect to the third to fifth symbols S_2 to S_4 and the sixteenth and seventeenth subcarriers Sub_15 and Sub_16. Accordingly, the UE may determine that the reliability of a plurality of estimate values (EV in FIG. 3) respectively corresponding to a plurality of REs, which correspond to the third to fifth symbols S_2 to S_4 and the sixteenth and seventeenth subcarriers Sub_15 and Sub_16, is low. REs that are determined to have low reliability (e.g. that are determined to have an MSE higher than a threshold) may be determined to be non-sample REs. Similarly, REs that are determined to have a high reliability (e.g. that are determined to have an MSE less than or equal to a threshold) may be determined to be sample REs.

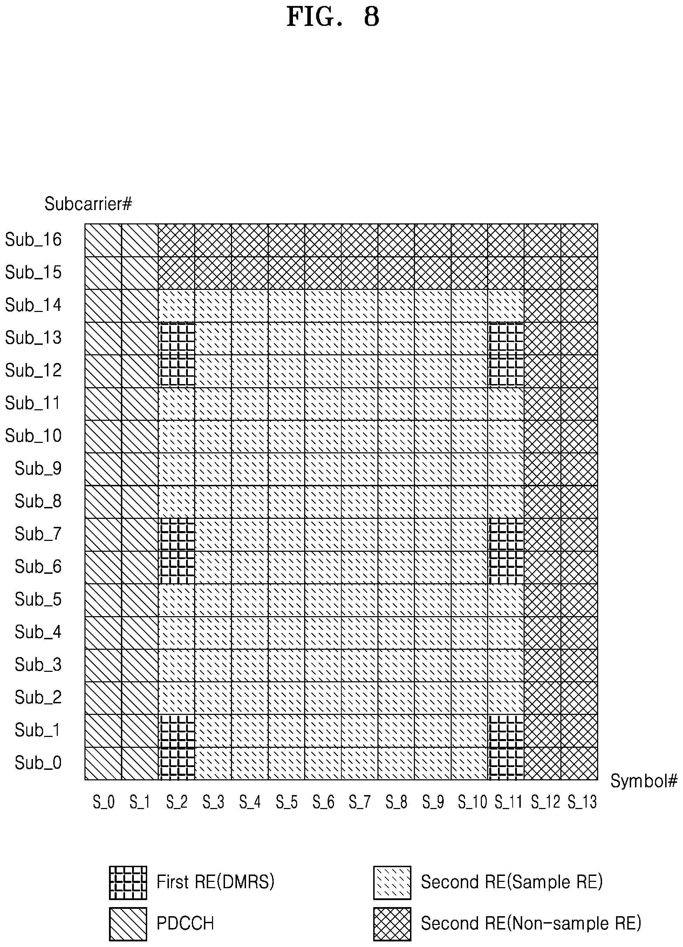

FIG. 8 illustrates a resource grid including a plurality of REs allocated to a PDCCH, a PDSCH, and a DMRS, according to an embodiment.

FIG. 8 may be described with reference to FIGS. 6 and 7, and redundant descriptions thereof are omitted.

As described above, a UE may generate the second NI covariance matrix R2 (in FIG. 3) based on the sample selection information SSI (in FIG. 3) regarding the positions and/or number of sample REs. The UE may generate the second whitening filter W2 (in FIG. 4) based on the second NI covariance matrix R2 (in FIG. 3).

As described above with reference to FIG. 7, the UE may determine that the reliability of the estimate values EV (in FIG. 3) respectively corresponding to the REs, which correspond to the thirteenth symbol S_12, the fourteenth symbol S_13, and the first to seventeenth subcarriers Sub_0 to Sub_16, is low. The UE may also determine that the reliability of the estimate values (EV in FIG. 3) respectively corresponding to the REs, which correspond to the third to fifth symbols S_2 to S_4 and the sixteenth and seventeenth subcarriers Sub_15 and Sub_16, is low.

Although not illustrated in FIG. 7 for convenience of explanation, it is assumed that the CE MSEs respectively corresponding to the sixth to twelfth symbols S_5 to S_11 exhibit a tendency similar to that of any one of the CE MSEs respectively corresponding to the third to fifth symbols S_2 to S_4 in FIG. 7. For example, the CE MSEs respectively corresponding to the sixth to twelfth symbols S_5 to S_11 may be relatively high in a region corresponding to the sixteenth and seventeenth subcarriers Sub_15 and Sub_16. Accordingly, the UE may determine that the reliability of a plurality of estimate values (EVs in FIG. 3), each corresponding to a respective RE associated with the sixth to twelfth symbols S_5 to S_11 and the sixteenth and seventeenth subcarriers Sub_15 and Sub_16, is low.

According to an embodiment, the UE may select a sample RE based on the reliability of the estimate values (EV in FIG. 3). Referring to FIG. 8, the UE may select, as sample REs, REs having relatively high reliability (e.g. having an MSE less than or equal to a threshold) among a plurality of second REs allocated to the PDSCH (e.g. as sample REs). Among the second REs, REs having relatively low reliability (e.g. having an MSE greater than the threshold) may be referred to as non-sample REs.

A sample RE and a non-sample RE in FIG. 8 will be understood through the descriptions made with reference to FIG. 7 above. Here, the second REs allocated to the PDSCH may be defined as including a sample RE and a non-sample RE.

According to an embodiment, a UE may store the sample selection information SSI (in FIG. 3). According to an embodiment, the sample selection information SSI may include, but is not limited to, information about the positions and/or number of sample REs determined based on MSE. The UE may generate the second NI covariance matrix R2 to generate the second whitening filter W2 (in FIG. 4) for the PDSCH based on the sample selection information SSI (in FIG. 3). Because the UE generates the second whitening filter W2 (in FIG. 4) based on some REs (e.g., sample REs) among the second REs, the accuracy of a whitening filter may be increased, and time and power consumed to generate the whitening filter may be decreased.

Here, in the resource grid, a region constituted of sample REs may be referred to as a sample region and a region constituted of non-sample REs may be referred to as a non-sample region.

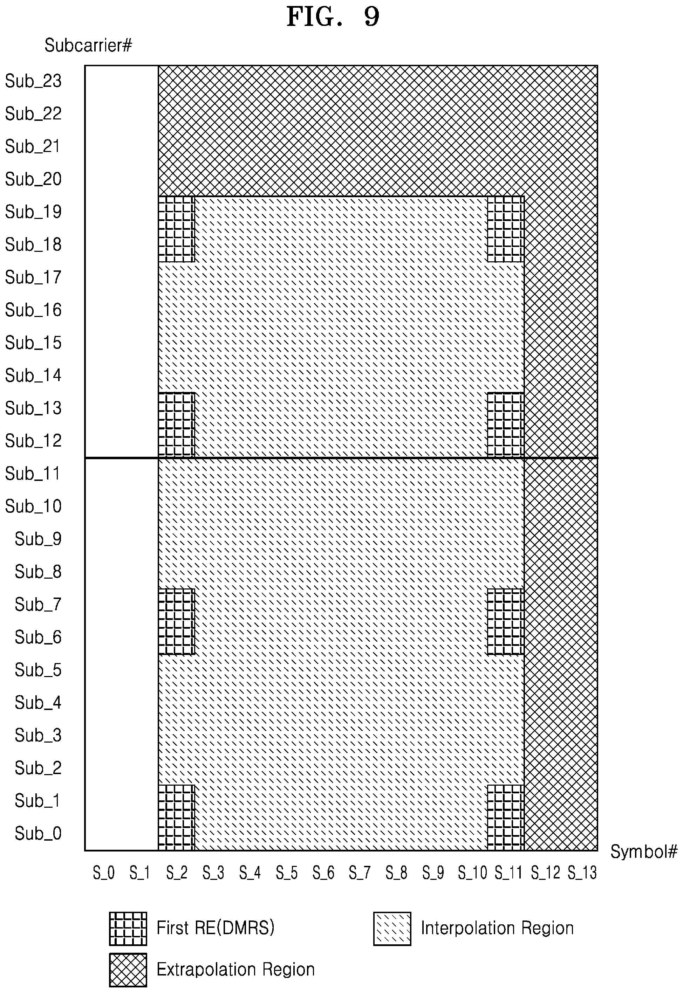

FIG. 9 illustrates a resource grid including an interpolation region and an extrapolation region, according to an embodiment.

FIG. 9 may be described with reference to FIGS. 6 to 8, and redundant descriptions thereof are omitted.

The resource grid of FIG. 9 may further include eighteenth to 24th subcarriers Sub_17 to Sub_23 compared to the resource grids of FIGS. 6 and 8.

Referring to FIG. 9, the resource grid may include two RBs. The resource grid of FIG. 9 may include a first RB, which includes a plurality of REs corresponding to the third to fourteenth symbols S_2 to S_13 and the first to twelfth subcarriers Sub_0 to Sub_11, and a second RB, which includes a plurality of REs corresponding to the third to fourteenth symbols S_2 to S_13 and the thirteenth to 24th subcarriers Sub_12 to Sub_23.

Referring to FIG. 9, a UE according to an embodiment may determine the sample region and the non-sample region, described above, based on a plurality of first REs allocated to the DMRS. For example, the UE may determine the interpolation region based on the DMRS. In FIG. 9, the interpolation region may correspond to the sample region. In other words, the UE according to an embodiment may determine sample REs based on the interpolation region determined based on the first REs. However, the disclosure is not limited thereto, and the sample region may be wider than the interpolation region. In an example case in which the reliability of a second RE that is not included in the interpolation region is determined to be high, the UE according to an embodiment may select, as a sample RE, the second RE that is not included in the interpolation region. A region including second REs not included in the interpolation region may be referred to as the extrapolation region.

As described above, the interpolation region may be determined based on the first REs allocated to the DMRS. For example, the range of the interpolation region may be determined based on the positions of the first REs allocated to the DMRS. For example, as shown in FIG. 9, the range of the interpolation region may be determined based on a first RE (e.g., a first RE corresponding to S_11), which has the largest symbol index among the first REs, a first RE (e.g., a first RE corresponding to S_2), which has the smallest symbol index among the first REs, a first RE (e.g., a first RE corresponding to Sub_19), which has the largest subcarrier index among the first REs, and a first RE (e.g., a first RE corresponding to Sub_0), which has the smallest subcarrier index among the first REs.

In an embodiment, a UE may determine an interpolation region based on four first REs among a plurality of first REs allocated to the DMRS. For example, the UE may determine the interpolation region in FIG. 9 based on four first REs. However, the disclosure is not limited thereto. For example, the UE may determine the interpolation region based on four first REs included in the first block or the second block, described above.

As described above, the UE may generate the first whitened signal WS1 (in FIG. 3) by applying, to the PDSCH, the first whitening filter W1 (in FIG. 3), which is generated based on the first REs allocated to the DMRS. The UE may generate the estimate values EV (in FIG. 3) based on the first whitened signal WS1 (in FIG. 3). Here, because the first whitening filter W1 (in FIG. 3) is generated based on the first REs allocated to the DMRS, the first whitening filter W1 may reflect the characteristics of interference in the DMRS. The characteristics of interference in second REs among the first REs allocated to the DMRS (e.g., second REs in the interpolation region) may be similar to the characteristics of interference in the DMRS. Accordingly, the reliability of the estimate value EV (in FIG. 3) corresponding to a second RE in the interpolation region among a plurality of estimate values generated based on the first whitening filter W1 (in FIG. 3) may be relatively high.

According to an embodiment, the number of one of more sample REs may be greater than the number of non-sample REs. According to an embodiment, a UE may determine more sample REs than the number of non-sample REs so that at least one sample RE may represent the interference characteristics of the PDSCH. Accordingly, the area of the sample region may be larger than the area of the non-sample region.

According to an embodiment, a UE may determine the interpolation region based on a plurality of first REs allocated to the DMRS and select, as sample REs, second REs included in the interpolation region among a plurality of second REs allocated to the PDSCH. For example, the sample selection information SSI (in FIG. 3) described above may include information (e.g., the largest symbol index and the smallest symbol index among symbol indices of the first REs and the largest subcarrier index and the smallest subcarrier index among subcarrier indices of the first REs) about the positions of the first REs allocated to the DMRS.

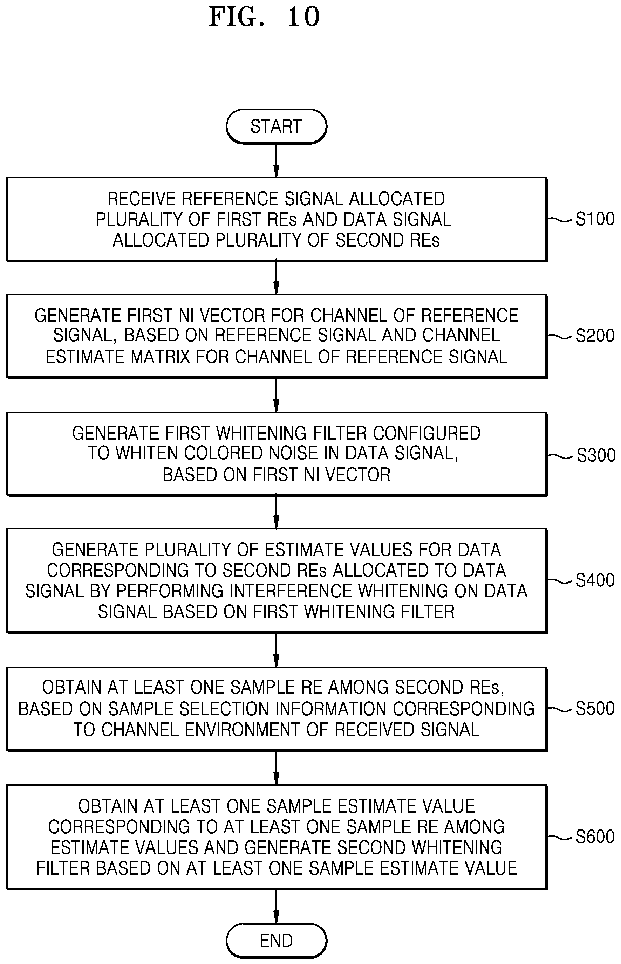

FIG. 10 is a flowchart of an operating method of a UE, according to an embodiment.

Referring to FIG. 10, in operation S100, the operating method according to an embodiment may include receiving a reference signal and a data signal. For example, the UE may receive the reference signal that is allocated a plurality of first REs and the data signal that is allocated a plurality of second REs.

According to an embodiment, in operation S200, the operating method may include generating a first NI vector for the channel of the reference signal and a channel estimate matrix for the channel of the reference signal. For example, the UE may generate the first NI vector for the channel of the reference signal, based the reference signal and the channel estimate matrix for the channel of the reference signal.

According to an embodiment, in operation S300, the operating method may include generating a first whitening filter configured to whiten colored noise in the data signal. For example, the UE may generate the first whitening filter configured to whiten colored noise in the data signal, based on the first NI vector.

According to an embodiment, in operation S400, the operating method may include generating a plurality of estimate values for data by performing interference whitening on the data signal based on the first whitening filter. For example, the UE may generate the plurality of estimate values for data, which corresponds to the second REs allocated to the data signal, by performing interference whitening on the data signal based on the first whitening filter.

According to an embodiment, in operation S500, the operating method may include obtaining at least one sample RE among the second REs, based on sample selection information corresponding to the channel environment of the received signal. For example, the UE may obtain or determine at least one sample RE among the second REs, based on sample selection information corresponding to the channel environment of the received signal. As described above, according to an embodiment, the UE may determine an interpolation region based on a symbol index and a subcarrier index of each of the first REs and determine, as at least one sample RE, a second RE included in the interpolation region among the second REs. According to an embodiment, the UE may determine the interpolation region, based on the smallest symbol index and the largest symbol index among the respective symbol indices of the first REs and the smallest subcarrier index and the largest subcarrier index among the respective subcarrier indexes of the first REs. The interpolation region may comprise second REs falling within the range of the smallest subcarrier index and the largest subcarrier index among the respective subcarrier indexes of the first REs and the range of the smallest symbol index and the largest symbol index among the respective symbol indices of the first REs. The interpolation region may exclude the first REs.

As described above, the sample selection information may include at least one selected from the group including a delay spread, a Doppler frequency, and the number of first REs in one RB, with respect to the channel of the received signal. According to an embodiment, a ratio of one or more sample REs to the second REs may decrease as the Doppler frequency and the delay spread increase. According to an embodiment, the number of one or more sample REs may increase as the number of first REs in one RB increases.

According to an embodiment, in operation S600, the operating method may include obtaining at least one sample estimate value corresponding to the at least one sample RE among the estimate values and generating a second whitening filter based on the sample estimate value. For example, the UE may obtain or determine the at least one sample estimate value corresponding to the at least one sample RE among the estimate values and generate the second whitening filter based on the sample estimate value. As described above, the UE according to an embodiment may generate the second whitening filter, based on the sample estimate value and the second NI vector N2 (in FIG. 3), which is generated based on the sample estimate value, for the PDSCH.

According to an embodiment, the UE may perform whitening on interference in the data signal, based on the second whitening filter, thereby generating a plurality of data values respectively corresponding to the second REs allocated to the data signal.

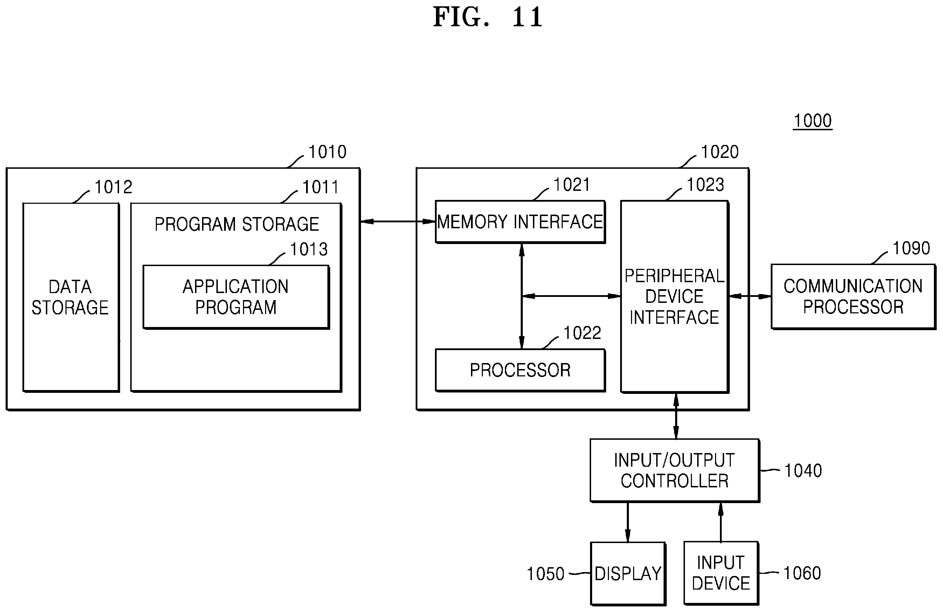

FIG. 11 is a block diagram of an electronic apparatus according to an embodiment.

Referring to FIG. 11, an electronic apparatus 1000 may include a memory 1010, a processor unit 1020, an input/output controller 1040, a display 1050, an input device 1060, and a communication processor 1090. However, the disclosure is not limited thereto, and as such, according to another embodiment, the electronic apparatus 1000 may include one or more other components or omit one or more components. According to an embodiment, the electronic apparatus 1000 may include a plurality of memories 1010.

According to an embodiment, the memory 1010 may include a program storage 1011, which stores a program for controlling an operation of the electronic apparatus 1000, and a data storage 1012, which stores data generated during execution of the program. The data storage 1012 may store data necessary for the operation of an application program 1013 or data generated from the operations of the application program 1013. The memory may include a volatile memory or a non-volatile memory.

The program storage 1011 may include the application program 1013. At this time, a program included in the program storage 1011 may be a set of instructions and expressed as an instruction set. The application program 1013 may include program code for executing various applications run by the electronic apparatus 1000. In other words, the application program 1013 may include code (or commands) related to various applications run by a processor 1022.

According to an embodiment, the processor unit 1020 may include a memory interface 1021, a processor 1022, and a peripheral device interface 1023. The memory interface 1021 may provide an interface between the processor 1022 and the memory 1010. For example, data is transferred from the memory 1010 to the processor 1020 through the memory interface 1021, or data is transferred to the memory 1010 from the processor 1020 through the memory interface 1021. Also, the memory interface 1021 may provide an interface between peripheral device interface 1023 and the memory 1010. The peripheral device interface 1023 may control connection among the input/output controller 1040, the communication processor 1090, the processor 1022, and the memory interface 1021. The processor 1022 may control a plurality of base stations to provide a service by using at least one software program. At this time, the processor 1022 may execute at least one program stored in the memory 1010 to provide a service corresponding to the program. The processor 1022 may include, but is not limited to, a central processing unit (CPU), a digital signal processor (DSP), and a graphics processing unit (GPU), reconfigurable components, such as a field programmable gate array (FPGA), and a component providing a fixed function, such as an intellectual property (IP) block.

According to an embodiment, the communication processor 1090 of the electronic apparatus 1000 may perform communication with an external device. For example, the communication processor 1090 may perform operations and/or functions for voice communication and data communication, but the disclosure is not limited thereto.

The input/output controller 1040 may provide an interface between an input/output device, such as the display 1050 or the input device 1060, and the peripheral device interface 1023. The display 1050 displays status information, input text, a moving picture, and/or a still picture. For example, the display 1050 may display information about an application program run by the processor 1022.

The input device 1060 may provide input data, which is generated by the selection of the electronic apparatus 1000, to the processor unit 1020 through the input/output controller 1040. At this time, the input device 1060 may include a keypad, which includes at least one hardware button, and/or a touch pad sensing touch information. For example, the input device 1060 may provide touch information, such as a touch, a movement of the touch, or the release of the touch, which is detected through a touch pad, to the processor 1022 through the input/output controller 1040.

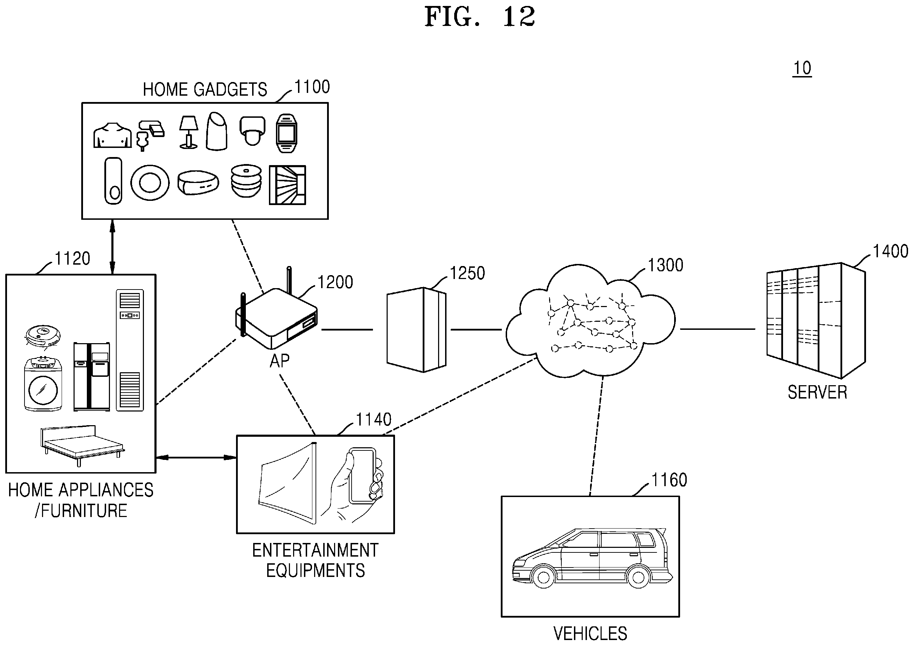

FIG. 12 is a conceptual diagram of an Internet of things (IoT) network system using embodiments.

Referring to FIG. 12, an IoT network system 10 may include a plurality of IoT devices (e.g., 1100, 1120, 1140, and 1160), an AP 1200, a gateway 1250, a wireless network 1300, and a server 1400. IoT may refer to a network among things using wired/wireless communication.

The IoT devices (1100, 1120, 1140, and 1160) may be grouped according to the characteristics of the IoT devices. For example, the IoT devices may be divided into a group of home gadgets 1100, a group of home appliances/furniture 1120, a group of entertainment equipments 1140, and a group of vehicles 1160. A plurality of IoT devices (1100, 1120, 1140, and 1160) may be connected to a communication network or another IoT device through the AP 1200. The AP 1200 may be embedded in one IoT device. The gateway 1250 may change a protocol to allow the AP 1200 to access an external wireless network. The IoT devices (1100, 1120, 1140, and 1160) may be connected to an external communication network through the gateway 1250. The wireless network 1300 may include Internet and/or a public network. The IoT devices (1100, 1120, 1140, and 1160) may be connected to the server 1400, which provides a certain service, through the wireless network 1300. Users may use the service through at least one of the IoT devices (1100, 1120, 1140, and 1160).

While the inventive concept has been particularly shown and described with reference to embodiments thereof, it will be understood that various changes in form and details may be made therein without departing from the scope of the following claims.

**Claims**

1. A semiconductor chip comprising:

   a transceiver configured to receive a reference signal and a data signal, the reference signal being allocated a plurality of first resource elements, REs, and the data signal being allocated a plurality of second REs; and
   a processor configured to:

      generate a first noise plus interference vector for a channel of the reference signal, based on the reference signal and a channel estimate matrix for the channel of the reference signal,
      generate a first filter, based on the first noise plus interference vector, the first filter being configured to filter interference noise in the data signal,
      generate a plurality of estimate values for data corresponding to the plurality of second REs allocated to the data signal by performing interference filtering on the data signal, based on the first filter,
      obtain at least one sample RE among the plurality of second REs, based on sample selection information corresponding to a channel environment of a reference signal received through the transceiver,
      obtain at least one sample estimate value corresponding to the at least one sample RE among the plurality of estimate values, and
      generate a second filter based on the at least one sample estimate value.

2. The semiconductor chip of claim 1, wherein
   the processor is further configured to generate a plurality of data values respectively corresponding to the plurality of second REs allocated to the data signal by performing, based on the second filter, filtering on interference in the data signal.

3. The semiconductor chip of claim 1 or claim 2, wherein

   the processor is further configured to obtain an interpolation region, based on information about a symbol index and a subcarrier index of each of the plurality of first REs, and
   the interpolation region comprising the at least one sample RE.

4. The semiconductor chip of any preceding claim, wherein

   the sample selection information comprises information about a delay spread for a channel of the reference signal received through the transceiver, and
   a number of the at least one sample RE decreases as the delay spread increases.

5. The semiconductor chip of any preceding claim, wherein

the sample selection information comprises information about a Doppler frequency for a channel of the reference signal received through the transceiver, and
a number of the at least one sample RE decreases as the Doppler frequency increases.

6. The semiconductor chip of any preceding claim, wherein

the sample selection information comprises information about a number of first REs in one resource block, RB, and
a number of the at least one sample RE increases as the number of first REs in one RB increases.

7. The semiconductor chip of claim 6, wherein
a ratio of the at least one sample RE to the plurality of second REs is proportional to the number of first REs in the one RB.

8. The semiconductor chip of any preceding claim, further comprising
a memory configured to store the sample selection information corresponding to at least one of: delay spread information, Doppler frequency information or information about a number of first REs in a resource block, RB, of the reference signal.

9. The semiconductor chip of any preceding claim, wherein

the plurality of second REs comprise at least one non-sample RE in addition to the at least one sample RE, and
a number of the at least one sample RE is greater than a number of the at least one non-sample RE.

10. An operating method of a semiconductor chip, the operating method comprising:

receiving a reference signal and a data signal, the reference signal being allocated a plurality of first resource elements, REs, and the data signal being allocated a plurality of second REs;
generating a first noise plus interference vector for a channel of the reference signal, based on the reference signal and a channel estimate matrix for the channel of the reference signal;
generating a first filter, based on the first noise plus interference vector, the first filter being configured to filter interference noise in the data signal;
generating a plurality of estimate values for data corresponding to the plurality of second REs allocated to the data signal by performing interference filtering on the data signal, based on the first filter;
obtaining at least one sample RE among the plurality of second REs, based on sample selection information corresponding to a channel environment of a reference signal;
obtaining at least one sample estimate value corresponding to the at least one sample RE among the plurality of estimate values; and
generating a second filter based on the at least one sample estimate value.

11. The operating method of claim 10, further comprising
generating a plurality of data values respectively corresponding to the plurality of second REs allocated to the data signal by performing, based on the second filter, interference filtering on the data signal.

12. The operating method of claim 10 or claim 11, wherein
the obtaining of the at least one sample RE comprises:

obtaining an interpolation region, based on a symbol index and a subcarrier index of each of the plurality of first REs; and
obtaining, as the at least one sample RE, at least one second RE in the interpolation region among the plurality of second REs.

13. The operating method of claim 12, wherein
the obtaining of the interpolation region comprises obtaining the interpolation region, based on a largest symbol index and a smallest symbol index among respective symbol indices of the plurality of first REs and on a largest subcarrier index and a smallest subcarrier index among respective subcarrier indices of the plurality of first REs.

14. The operating method of any of claims 10-13, wherein

the sample selection information comprises information about at least one of a delay spread and a Doppler frequency, for a channel of the reference signal.

15. The operating method of claim 14, wherein a ratio of the at least one sample RE to the plurality of second REs decreases as the Doppler frequency and the delay spread increases.

FIG. 1

EP 4 679 718 A1

# FIG. 2

# FIG. 3

# FIG. 4

EP 4 679 718 A1

# FIG. 5

Radio frame 214

Subframe 205

Slot 206

RE 212

$N_{BW}$ subcarriers 204

$N_{RB}$ subcarriers 210

RB 208

$N_{symb}$ OFDM symbols 202

Frequency

Time

# FIG. 6

FIG. 7

EP 4 679 718 A1

# FIG. 8

Subcarrier#

Symbol#

⊞ First RE(DMRS)          ⬚ Second RE(Sample RE)

⬛ PDCCH                   ⬛ Second RE(Non-sample RE)

# FIG. 9

Subcarrier#

Sub_23
Sub_22
Sub_21
Sub_20
Sub_19
Sub_18
Sub_17
Sub_16
Sub_15
Sub_14
Sub_13
Sub_12
Sub_11
Sub_10
Sub_9
Sub_8
Sub_7
Sub_6
Sub_5
Sub_4
Sub_3
Sub_2
Sub_1
Sub_0

Symbol#

S_0  S_1  S_2  S_3  S_4  S_5  S_6  S_7  S_8  S_9  S_10 S_11 S_12 S_13

First RE(DMRS)          Interpolation Region

Extrapolation Region

# FIG. 10

START

RECEIVE REFERENCE SIGNAL ALLOCATED PLURALITY OF FIRST REs AND DATA SIGNAL ALLOCATED PLURALITY OF SECOND REs — S100

GENERATE FIRST NI VECTOR FOR CHANNEL OF REFERENCE SIGNAL, BASED ON REFERENCE SIGNAL AND CHANNEL ESTIMATE MATRIX FOR CHANNEL OF REFERENCE SIGNAL — S200

GENERATE FIRST WHITENING FILTER CONFIGURED TO WHITEN COLORED NOISE IN DATA SIGNAL, BASED ON FIRST NI VECTOR — S300

GENERATE PLURALITY OF ESTIMATE VALUES FOR DATA CORRESPONDING TO SECOND REs ALLOCATED TO DATA SIGNAL BY PERFORMING INTERFERENCE WHITENING ON DATA SIGNAL BASED ON FIRST WHITENING FILTER — S400

OBTAIN AT LEAST ONE SAMPLE RE AMONG SECOND REs, BASED ON SAMPLE SELECTION INFORMATION CORRESPONDING TO CHANNEL ENVIRONMENT OF RECEIVED SIGNAL — S500

OBTAIN AT LEAST ONE SAMPLE ESTIMATE VALUE CORRESPONDING TO AT LEAST ONE SAMPLE RE AMONG ESTIMATE VALUES AND GENERATE SECOND WHITENING FILTER BASED ON AT LEAST ONE SAMPLE ESTIMATE VALUE — S600

END

# FIG. 11

EP 4 679 718 A1

# FIG. 12

HOME GADGETS — 1100

1120

HOME APPLIANCES /FURNITURE

1200
AP

1140

ENTERTAINMENT EQUIPMENTS

1250

1300

1160

VEHICLES

10

1400

SERVER

EP 4 679 718 A1

Europäisches
Patentamt

European
Patent Office

Office européen
des brevets

**EUROPEAN SEARCH REPORT**

| Application Number |
| --- |
| **EP 25 17 5927** |

## DOCUMENTS CONSIDERED TO BE RELEVANT

| Category | Citation of document with indication, where appropriate, of relevant passages | Relevant to claim | CLASSIFICATION OF THE APPLICATION (IPC) |
| --- | --- | --- | --- |
| X | US 2024/113759 A1 (KWON HYUKJOON [US] ET AL) 4 April 2024 (2024-04-04) <br> * paragraph [0002] * <br> * paragraph [0029] * <br> * paragraph [0031] - paragraph [0034] * <br> * paragraph [0073] * <br> * paragraph [0089]; figures 2, 3, 5, 10 * <br> ----- | 1-15 | INV. <br> H04B1/10 |
| | | | **TECHNICAL FIELDS SEARCHED (IPC)** |
| | | | H04B |

The present search report has been drawn up for all claims

| Place of search | Date of completion of the search | Examiner |
| --- | --- | --- |
| Munich | 24 September 2025 | Marzenke, Marco |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
...................................................................................
& : member of the same patent family, corresponding
    document

EPO FORM 1503 03.82 (P04C01)

## ANNEX TO THE EUROPEAN SEARCH REPORT
## ON EUROPEAN PATENT APPLICATION NO.

EP 25 17 5927

This annex lists the patent family members relating to the patent documents cited in the above-mentioned European search report.
The members are as contained in the European Patent Office EDP file on
The European Patent Office is in no way liable for these particulars which are merely given for the purpose of information.

24-09-2025

| Patent document cited in search report | Publication date | Patent family member(s) | Publication date |
|---|---|---|---|
| US 2024113759 A1 | 04-04-2024 | DE 102023116223 A1 | 28-03-2024 |
| | | KR 20240043073 A | 02-04-2024 |
| | | TW 202415016 A | 01-04-2024 |
| | | US 2024113759 A1 | 04-04-2024 |

EPO FORM P0459

For more details about this annex : see Official Journal of the European Patent Office, No. 12/82